# EUROPEAN PATENT SPECIFICATION

(11) **EP 3 445 507 B1**
(45) Date of publication and mention of the grant of the patent: **01.07.2020**
(21) Application number: 17795192.8
(22) Date of filing: 11.05.2017
(51) Int. Cl.: B21B 37/76, B22D 11/16, B22D 11/112, B22D 11/14, B21B 37/74, B22D 11/06

(54) **STRIP TEMPERATURE VARIATION CONTROL BY DIRECT STRIP CASTING**
KONTROLLE VON BANDÜBERGREIFENDEN TEMPERATURSCHWANKUNGEN BEIM BANDGIESSEN
CONTRÔLE DE VARIATION DE TEMPÉRATURE DE BANDES MINCES PRODUITES PAR COULÉE EN CONTINU

(30) Priority: 11.05.2016 US 201662334763 P
(43) Date of publication of application: 27.02.2019
(73) Proprietor: Nucor Corporation, Charlotte, NC 28211 (US)
(72) Inventor: WATSON, James W., Brownsburg Indiana 46112 (US); REES, Harold Bradley, Ladoga Indiana 47954 (US)
(74) Representative: Hedges, Martin Nicholas
(86) International application number: PCT/AU2017/050432
(87) International publication number: WO 2017/193171

(56) References cited:
- JP-A- 2000 280 049
- US-A- 6 089 308
- US-A1- 2009 314 459
- US-A1- 2010 132 426
- US-A1- 2010 132 426
- US-B2- 7 891 407
- US-B2- 8 651 168
- LINDENBERG H U ET AL: "EUROSTRIP - STATE OF THE ART OF STRIP CASTING//EUROSTRIP - ETAT DE L'ART DE LA COULEE DIRECTE DE BANDES MINCES", REVUE DE METALLURGIE- CAHIERS D'INFORMATIONS TECHNIQUES,, vol. 99, no. 7/08, 1 July 2002 (2002-07-01), pages 615-627, XP001142588, ISSN: 0035-1563, DOI: 10.1051/METAL:2002201

## Description

This invention relates to the making of thin strip and more particularly to casting of thin strip by a twin roll caster. In a twin roll caster, molten metal is delivered from a delivery system to a casting pool supported on casting surfaces of a pair of counter-rotated horizontal casting rolls, which are internally water cooled so that solidified metal shells form on the moving casting roll surfaces. The metal shells are brought together at a nip between them to produce a solidified strip product delivered downwardly from the nip between the casting rolls. The term "nip" is used herein to refer to the general region at which the casting rolls are closest together. The molten metal may be poured from a ladle into a smaller vessel or series of smaller vessels from which it flows through a metal delivery nozzle or nozzles located above the nip, to form the casting pool of molten metal supported on the casting surfaces of the casting rolls above the nip and extending the length of the nip. The casting pool is usually confined between side plates or side dams held in sliding engagement with end portions of the casting rolls to restrict the casting pool against outflow. The upper surface of the casting pool (generally referred to as the "meniscus" level) is usually above the lower end of the delivery nozzle so that the lower end of the delivery nozzle is immersed within the casting pool.

When casting steel strip by a twin roll caster, the thin strip exits the nip, passes across a guide table, through a pinch roll stand and then through a hot rolling mill, where the thin strip is reduced to a desired thickness. As the thin strip exits the hot rolling mill, the temperature distribution across the width of the thin strip is generally at variance. Thus, spray cooling the entire width of the thin strip with a constant flow may result in diverse microstructures and/or strip properties through the thin strip. As such, there is a need for a method to control the cross-strip temperature variation and provide more uniform temperature distribution across the width of the thin strip, as well as controlling the cooling rate of the thin strip to produce a final, cooled thin strip product having a desired microstructure and/or one or more desired material properties.

US 2010/132426, which is considered to represent the closest prior art, discloses apparatus for and a method of continuously casting metal strip in which temperature readings are taken a different points across the strip upstream of the hot rolling mill and downstream of a cooling zone, the cooling zone including individually controllable cooling means extending across the strip, temperature distribution determined from the temperature readings being used to control the cooling across the strip for the purpose of achieving a substantially uniform temperature across the width of the thin strip.

Another prior art method is disclosed in US 2009/314459.

The presently disclosed method provides for selective control of temperatures across the width of the thin strip and provides for more uniform control of microstructure and properties of the strip.

According to a first aspect of the present invention there is provided a method of continuously casting metal strip according to claim 1.

It is appreciated that the coolant discharge ports may comprise any structure or mechanism configured to discharge coolant, such as a spray nozzle, tube, or orifice, for example. It is noted that in any embodiment discussed herein, any coolant discharge port may be employed as a substitute there for unless specifically noted otherwise. The plurality of coolant discharge ports are arranged into a plurality of rows each configured to substantially cool a full width of the thin strip. Because each coolant discharge port may discharge coolant in a pattern wider than the port itself, greater coverage may be attained, such as when the port is a spray nozzle, where the spray may discharge outwardly to form a pattern of spray wider than the nozzle itself. Accordingly, any row of discharge ports may be configured to discharge coolant across a full width of the strip without the row fully extending across the strip width. Each coolant discharge port is adapted to independently cool a portion of the thin strip across the width of the thin strip, where a first row of the plurality of rows is divided into three or more zones, each of the three or more zones including at least one of the plurality of coolant discharge ports.

After initially sensing an initial temperature distribution and initially cooling the thin strip using the initial temperature distribution, such methods may optionally include subsequently sensing a temperature of the thin strip at any of one or more locations along the thin strip or cooling section, that is, subsequent to sensing the temperature distribution at the first plurality of locations. For example, such methods described above may include subsequently sensing a temperature of the thin strip at a second plurality of locations across the thin strip to determine a temperature distribution across the width of the thin strip subsequent to the first plurality of locations and after individually controlling the cooling across the thin strip along the first row, and producing a sensor signal corresponding to a sensed temperature at each of the second plurality of locations. The subsequently sensed temperatures or temperature distributions may be employed any of a variety of ways to control the cooling of the thin strip.

These subsequently determined temperatures may be used to further control the cooling to achieve a substantially uniform temperature across the width of the thin strip, and/or may be used to determine that a substantially uniform temperature distribution has been achieved so thereafter the substantially full width of the strip may be together cooled to or below a desired phase transformation temperature and/or cooled by a particular cooling rate to achieve any desired cooling effects. In certain examples, the methods include subsequently controlling the cooling across the thin strip by way of the coolant discharge port or ports in each zone of a second row of the plurality of rows using the temperature distribution determined in the step of subsequently sensing, to assist in achieving the substantially uniform temperature across the width of the thin strip and/or to achieve the particular microstructure in the thin strip at the end of the cooling section. In certain instances, the second row is located along the cooling section between the first row and the second plurality of locations across the thin strip or the end of the cooling section, or anywhere after the first row and the end of the cooling section.

It is appreciated that the second plurality of locations, when present, may be located anywhere along the cooling section, from the beginning to the end of the cooling section. In certain instances, where the first plurality of locations determines a temperature distribution at the beginning of the cooling section, the second plurality of locations is located between the beginning and the end, or at the end, of the cooling section. In other instances, the second plurality of locations is configured to determine a final temperature distribution across the thin strip, which may or may not be located at an end of the cooling section. It is also appreciated that the subsequently determined temperature distribution at the second plurality of locations may be used to control the first row of coolant discharge ports, in addition to, or without, using said subsequent temperature distribution to control any second row of coolant discharge ports, if present. It is also contemplated that additional cooling may be performed, which may be controlled. Accordingly, additional steps may include subsequently controlling the cooling across the thin strip by way of the coolant discharge port or ports in each zone of any one or more additional rows of the plurality of rows, to assist in achieving the substantially uniform temperature across the width of the thin strip and/or to achieve the particular microstructure in the thin strip at the end of the cooling section.

Ultimately, as these methods are being performed, and as a result thereof, a thin strip is formed at the end of the cooling section having a particular microstructure and/or any desired material property extending substantially across the width of the thin strip. These methods perform this by cooling a width of the strip to achieve a substantially constant temperature, and in certain instances before reaching any phase transformation temperature, and then cooling the substantially constant temperature strip width to a desired temperature at any desired rate to achieve the substantially uniform microstructure and/or material property across the strip width.

"Substantially", as used herein, represents that minor imperfections and/or variations may exist due to the imperfections in performing any process, whereby, even though minor imperfections may exist, an overwhelming majority is characterized as achieving the intended purpose or characterization, such as in cooling a full width of the thin strip or in forming a uniform microstructure across the full width of the thin strip.

As each of the plurality of rows is typically configured to substantially cool a full width of the thin strip, it is appreciated that for any row, the plurality of coolant discharge ports, each of which may comprise any structure or mechanism for discharging coolant, such as tubes, spray nozzles, or orifices, for example, may be arranged to extend partially or fully across the width of the cooling section or thin strip. It is appreciated that for any such row, the plurality of spray nozzles arranged in the row may also be arranged in a linear arrangement extending purely in the widthwise direction of the thin strip or cooling section, meaning, that the nozzles are arranged along a linear path extending in a direction normal to the direction of thin strip travel. In other variations, the row is across the width in a non-normal direction, that is, any direction biased to the normal direction, so long as the row extends substantially (that is, greater than 45 degrees from the direction of strip travel) in the widthwise direction of the thin strip or cooling section.

It is appreciated that, for any row of coolant discharge ports, the coolant discharge ports may be arranged along one or more headers, each header comprising a conduit, such as a tube or pipe, having a length extending at least partially across a width of the thin strip. The plurality of headers may comprise at least two headers. Alternatively, the plurality of headers may comprise at least three headers. The headers in the cooling section may have at least three or five zones, each zone having one or more coolant discharge ports adapted to independently cool the thin strip in each zone across the width with a coolant flow. Further, the zones in each header in the cooling section can be independently adjusted so that the temperature distribution across the strip after each header in the cooling section may be more uniform. It is also appreciated that in certain embodiments of the methods, the plurality of coolant discharge ports include coolant discharge ports spaced apart in a lengthwise direction of the thin strip as arranged in the multiple rows to continue to cool the thin strip as the thin strip translates along a length of the cooling section.

In controlling the cooling of the thin strip, such methods may utilize any known parameter. In certain exemplary embodiments of such methods, individually controlling the cooling of the thin strip in each zone of the first row is performed by controlling the discharge flow rate of any one or more of the plurality of the coolant discharge ports. This controlling may be achieved by controlling any available parameter. For example, in certain instances, individually controlling the cooling of the thin strip is performed by adjusting the discharge flow rate of one or more of the plurality of coolant discharge ports. Accordingly, any sensor configured to measure or monitor any desired parameter may be employed by a user or a controller for the purpose of controlling the cooling rate of the thin strip. For example, x-ray gauges may be employed to measure the thickness of the thin strip at any desired location.

The method of continuously casting metal strip may further comprise a controller. The controller may be adapted to control the coolant flow from the spray nozzles in each zone in the headers in the cooling zone to provide temperature regulation across the width of the thin strip at each header along the length of the cooling section.

The presently disclosed apparatus makes it possible for the above-described method of continuously casting metal strip to provide for selective control of temperatures across the width of the thin strip and to provide for more uniform control of microstructure and properties of the strip.

According to a further aspect of the present invention, there is provided an apparatus for continuously casting metal strip according to claim 15.

With this arrangement, in use, after achieving a substantially uniform temperature substantially across the width of the thin strip, the thin strip is cooled across the width of the strip to achieve a desired microstructure extending substantially across the width of the thin strip.

The apparatus may comprise any one or more of each the above-described coolant discharge ports such as in the form of spray nozzles), headers, and additional sensors.

### BRIEF DESCRIPTION OF THE DRAWINGS

In order that the invention may be described in more detail, some illustrative examples will be given with reference to the accompanying drawings in which:
FIG. **1** is a diagrammatical side view of a twin roll caster of the present disclosure;
FIG. **2** is an enlarged partial sectional view of a portion of the twin roll caster of FIG. 1 including a strip inspection device for measuring strip profile;
FIG. **2A** is a schematic view of a portion of twin roll caster of FIG. **2**;
FIG. **3** is a partial diagrammatical side view of the twin roll caster of FIG. **1** including a cooling section following a hot rolling mill;
FIG. **4** is a graphical representation of the cast thin strip temperature as the strip exits the hot rolling mill; and
FIG. **5** is an enlarged partial top view of another variation of the cooling section of FIG. **3****.**

### DETAILED DESCRIPTION OF THE DRAWINGS

The following description of the embodiments is in the context of high strength cast thin strip with microalloy additions made by continuous casting steel strip using a twin roll caster.

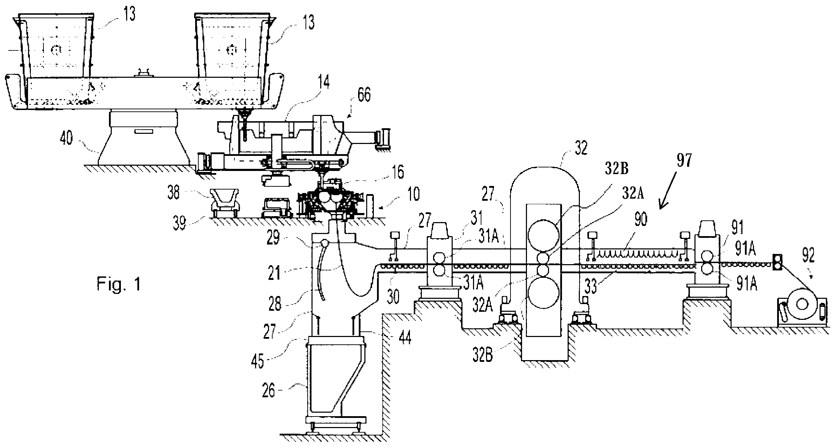

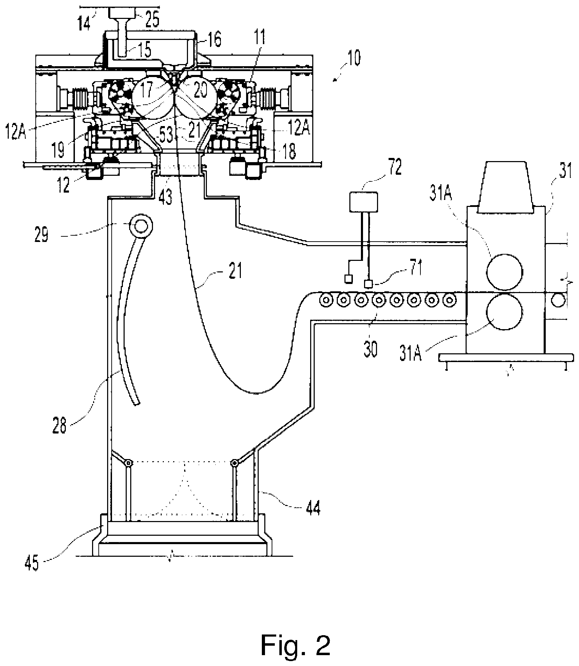

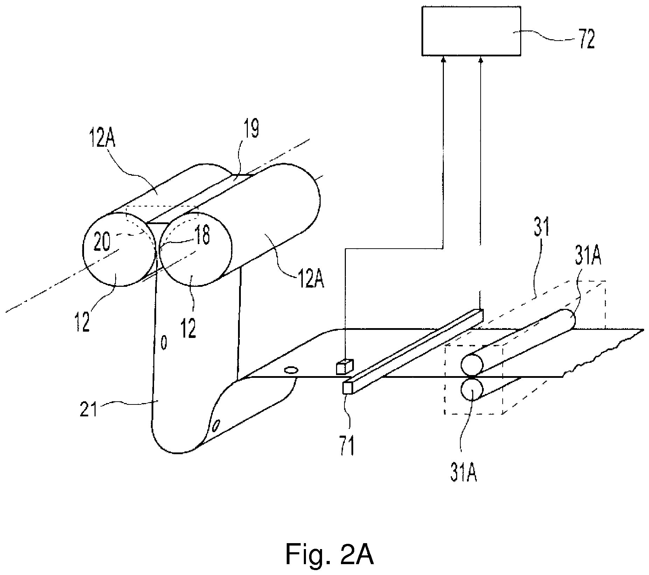

Referring now to FIGS. **1****,** **2****,** and **2A****,** a twin roll caster is illustrated that comprises a main machine frame **10** that stands up from the factory floor and supports a pair of counter-rotatable casting rolls **12** mounted in a module in a roll cassette **11.** The casting rolls **12** are mounted in the roll cassette **11** for ease of operation and movement as described below. The roll cassette **11** facilitates rapid movement of the casting rolls **12** ready for casting from a setup position into an operative casting position as a unit in the caster, and ready removal of the casting rolls **12** from the casting position when the casting rolls **12** are to be replaced. There is no particular configuration of the roll cassette **11** that is desired, so long as it performs that function of facilitating movement and positioning of the casting rolls **12** as described herein.

The casting apparatus for continuously casting thin steel strip includes the pair of counter-rotatable casting rolls **12** having casting surfaces **12A** laterally positioned to form a nip **18** there between. Molten metal is supplied from a ladle **13** through a metal delivery system to a metal delivery nozzle **17** (core nozzle) positioned between the casting rolls **12** above the nip **18.** Molten metal thus delivered forms a casting pool **19** of molten metal above the nip **18** supported on the casting surfaces **12A** of the casting rolls **12.** This casting pool **19** is confined in the casting area at the ends of the casting rolls **12** by a pair of side closure plates, or side dams **20** (shown in dotted line in FIG. **2A**). The upper surface of the casting pool **19** (generally referred to as the "meniscus" level) may rise above the lower end of the delivery nozzle **17** so that the lower end of the delivery nozzle **17** is immersed within the casting pool **19.** The casting area includes the addition of a protective atmosphere above the casting pool **19** to inhibit oxidation of the molten metal in the casting area.

The ladle **13** typically is of a conventional construction supported on a rotating turret **40.** For metal delivery, the ladle **13** is positioned over a movable tundish **14** in the casting position to fill the tundish **14** with molten metal. The movable tundish **14** may be positioned on a tundish car **66** capable of transferring the tundish **14** from a heating station (not shown), where the tundish **14** is heated to near a casting temperature, to the casting position. A tundish guide (not shown) may be positioned beneath the tundish car **66** to enable moving the movable tundish **14** from the heating station to the casting position.

The movable tundish **14** may be fitted with a slide gate **2**5, actuable by a servo mechanism, to allow molten metal to flow from the tundish **14** through the slide gate **25**, and then through a refractory outlet shroud **15** to a transition piece or distributor **16** in the casting position. From the distributor **16**, the molten metal flows to the delivery nozzle **17** positioned between the casting rolls **12** above the nip **18.**

The side dams **20** may be made from a refractory material such as zirconia graphite, graphite alumina, boron nitride, boron nitride-zirconia, or other suitable composites. The side dams **20** have a face surface capable of physical contact with the casting rolls **12** and molten metal in the casting pool **19.** The side dams **20** are mounted in side dam holders (not shown), which are movable by side dam actuators (not shown), such as a hydraulic or pneumatic cylinder, servo mechanism, or other actuator to bring the side dams **20** into engagement with the ends of the casting rolls **12.** Additionally, the side dam actuators are capable of positioning the side dams **20** during casting. The side dams **20** form end closures for the molten pool of metal on the casting rolls **12** during the casting operation.

FIG. **1** shows the twin roll caster producing the cast thin strip **21**, which passes across a guide table **30** to a pinch roll stand **31**, comprising pinch rolls **31A.** Upon exiting the pinch roll stand **31**, the cast thin strip **21** may pass through a hot rolling mill **32**, comprising a pair of work rolls **32A**, and backup rolls **32B**, forming a gap capable of hot rolling the cast thin strip **21** delivered from the casting rolls **12**, where the cast thin strip **21** is hot rolled to reduce the strip to a desired thickness, improve the strip surface, and improve the strip flatness. The work rolls **32A** have work surfaces relating to the desired strip profile across the work rolls **32A.** The hot rolled cast thin strip **21** then passes onto a run-out table **33** within cooling section **97**, where it may be cooled by contact with a coolant, such as water, supplied via spray nozzles **90** or other suitable means, and by convection and radiation. In any event, the hot rolled cast thin strip **21** may then pass through a second pinch roll stand **91** having a pair of rollers **91A** to provide tension of the cast thin strip **21**, and then to a coiler **92.**

At the start of the casting operation, a short length of imperfect strip is typically produced as casting conditions stabilize. After continuous casting is established, the casting rolls **12** are moved apart slightly and then brought together again to cause this leading end of the cast thin strip **21** to break away forming a clean head end of the following cast thin strip **21.** The imperfect material drops into a scrap receptacle **26**, which is movable on a scrap receptacle guide. The scrap receptacle **26** is located in a scrap receiving position beneath the caster and forms part of a sealed enclosure **27** as described below. The enclosure **27** is typically water cooled. At this time, a water-cooled apron **28** that normally hangs downwardly from a pivot **29** to one side in the enclosure **27** is swung into position to guide the clean end of the cast thin strip **21** onto the guide table **30** that feeds it to the pinch roll stand **31.** The apron **28** is then retracted back to its hanging position to allow the cast thin strip **21** to hang in a loop beneath the casting rolls **12** in enclosure **27** before it passes to the guide table **30** where it engages a succession of guide rollers.

An overflow container **38** may be provided beneath the movable tundish **14** to receive molten material that may spill from the tundish **14.** As shown in FIG. **1**, the overflow container **38** may be movable on rails **39** or another guide such that the overflow container **38** may be placed beneath the movable tundish **14** as desired in casting locations. Additionally, an optional overflow container (not shown) may be provided for the distributor **16** adjacent the distributor **16.**

The sealed enclosure **27** is formed by a number of separate wall sections that fit together at various seal connections to form a continuous enclosure wall that permits control of the atmosphere within the enclosure **27.** Additionally, the scrap receptacle **26** may be capable of attaching with the enclosure **27** so that the enclosure **27** is capable of supporting a protective atmosphere immediately beneath the casting rolls **12** in the casting position. The enclosure **27** includes an opening in the lower portion of the enclosure **27**, lower enclosure portion **44**, providing an outlet for scrap to pass from the enclosure **27** into the scrap receptacle **26** in the scrap receiving position. The lower enclosure portion **44** may extend downwardly as a part of the enclosure **27**, the opening being positioned above the scrap receptacle **26** in the scrap receiving position. As used in the specification and claims herein, "seal," "sealed," "sealing," and "sealingly" in reference to the scrap receptacle **26**, enclosure **27**, and related features may not be a complete seal so as to prevent leakage, but rather is usually less than a perfect seal as appropriate to allow control and support of the atmosphere within the enclosure **27** as desired with some tolerable leakage

A rim portion **45** may surround the opening of the lower enclosure portion **44** and may be movably positioned above the scrap receptacle **26**, capable of sealingly engaging and/or attaching to the scrap receptacle **26** in the scrap receiving position. The rim portion **45** may be movable between a sealing position in which the rim portion **45** engages the scrap receptacle **26**, and a clearance position in which the rim portion **45** is disengaged from the scrap receptacle **26.** Alternately, the caster or the scrap receptacle **26** may include a lifting mechanism to raise the scrap receptacle **26** into sealing engagement with the rim portion **45** of the enclosure **27**, and then lower the scrap receptacle **26** into the clearance position. When sealed, the enclosure **27** and scrap receptacle **26** are filled with a desired gas, such as nitrogen, to reduce the amount of oxygen in the enclosure **27** and provide a protective atmosphere for the cast thin strip **21.**

The enclosure **27** may include an upper collar portion **43** supporting a protective atmosphere immediately beneath the casting rolls **12** in the casting position. When the casting rolls **12** are in the casting position, the upper collar portion **43** is moved to the extended position closing the space between a housing portion **53** adjacent the casting rolls **12**, as shown in FIG. **2**, and the enclosure **27.** The upper collar portion **43** may be provided within or adjacent the enclosure **27** and adjacent the casting rolls **12**, and may be moved by a plurality of actuators (not shown) such as servo-mechanisms, hydraulic mechanisms, pneumatic mechanisms, and rotating actuators.

The casting rolls **12** are internally water cooled as described below so that as the casting rolls **12** are counter-rotated, shells solidify on the casting surfaces **12A**, as the casting surfaces **12A** move into contact with and through the casting pool **19** with each revolution of the casting rolls **12.** The shells are brought close together at the nip **18** between the casting rolls **12** to produce a cast thin strip product **21** delivered downwardly from the nip **18.** The cast thin strip product **21** is formed from the shells at the nip **18** between the casting rolls **12** and delivered downwardly and moved downstream as described above.

A strip thickness profile sensor **71** may be positioned downstream to detect the thickness profile of the cast thin strip **21** as shown in FIGS. **2** and **2A****.** The strip thickness sensor **71** may be provided between the nip **18** and the pinch rolls **31A** to provide for direct control of the casting roll **12.** The sensor may be an x-ray gauge or other suitable device capable of directly measuring the thickness profile across the width of the strip periodically or continuously. Alternatively, a plurality of non-contact type sensors may be arranged across the cast thin strip **21** at the roller table **30** and the combination of thickness measurements from the plurality of positions across the cast thin strip **21** are processed by a controller **72** to determine the thickness profile of the strip periodically or continuously. The thickness profile of the cast thin strip **21** may be determined from this data periodically or continuously as desired.

In operation, the strip leaves the nip at temperatures of the order of 1400 °C and greater. To prevent oxidation and scaling of the strip, the metal strip is cast downwardly into the enclosure **27** supporting a protective atmosphere immediately beneath the casting rolls in the casting position. The enclosure **27** may extend along the path of the cast thin strip until the first pinch roll stand **31**, and may extend along the path of the cast thin strip until the hot rolling mill **32** to reduce oxidation and scaling.

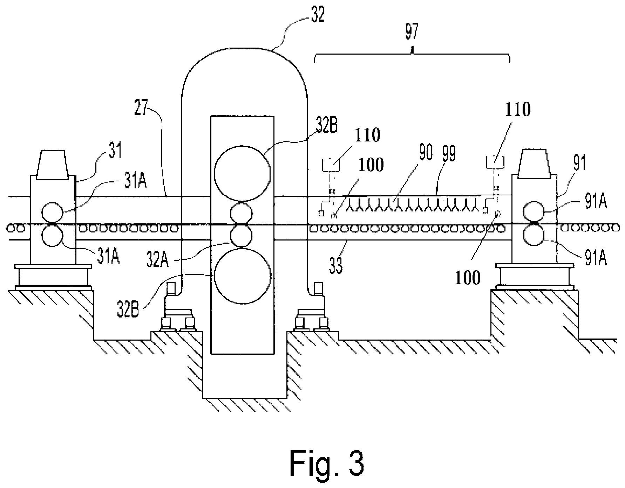

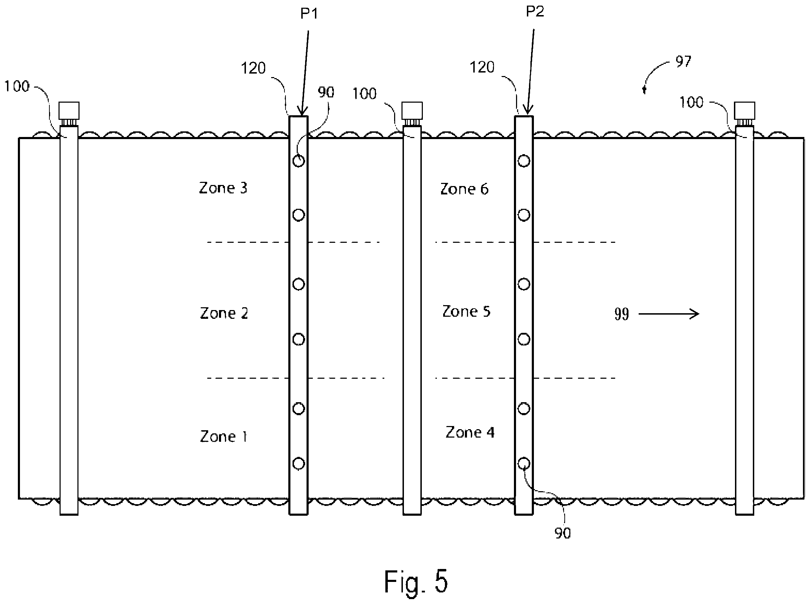

After the hot rolling mill **32**, the rolled thin strip then passes into cooling section **97** via the run-out table **33** where the strip may be cooled by spray nozzles **90**, or more generally coolant discharge ports. While spray nozzles atomize coolant to generate a spray, any coolant discharge port may be employed in any embodiment in lieu of spray nozzles. In addition to generating a spray, other types of coolant discharge ports may discharge a non-atomized flow of coolant. In the exemplary embodiment shown in FIG. **3**, cooling section **97** extends along the path **99** of the strip between the hot rolling mill **32** and the second pinch roll stand **91** with multiple spray nozzles **90** arranged there between. Temperature sensors **100** are also provided to measure the temperature of the thin strip across its width as the strip exits the hot rolling mill and enters the cooling section **97** for final cooling prior to entering the coilers **92.** Although it is not discernable in the view depicted in FIG. **3**, a plurality of spray nozzles **90** are arranged to extend substantially across the strip width or the cooling section width in a widthwise arrangement forming a row. Each temperature sensor **100** is arranged in communication with a controller **110** to measure and monitor the temperature of the thin strip across its width. As shown in FIG. **3**, this may be done at the beginning and end of the cooling section **97.** Additionally, or alternatively, in other embodiments, the temperature of the thin strip may be measured across its width at any one or more locations between the beginning and end of the cooling section, such as to monitor the thin strip temperatures as it translates through the cooling section. This is shown in one exemplary embodiment in FIG. **5**, which is discussed further below, where an intermediate sensor **100** is arranged between the beginning and end of the cooling section **97.** Temperature sensors may each comprise any desired sensor, such as a pyrometer, for example. By measuring the temperature across the thin strip width at or near the beginning of the cooling section **97**, any deviation in temperature across the strip width may be determined so cooling may be implemented to minimize or eliminate the temperature variation across the strip width. In doing so, the strip having a generally uniform temperature across its width may then be further cooled as needed to achieve a desired microstructure or material property at the end of the cooling section **97** or prior to entering the coilers **92.**

At least knowing the discharge flow rate(s) of the spray nozzles (which may be variable), the location of the spray nozzles across the strip width, and the temperature distribution across the thin strip, individualized cooling may be accomplished to provide a generally uniform temperature across the strip width. Subsequently, the thin strip having a generally uniform (constant) temperature across its width is further cooled as desired to achieve a uniform microstructure and/or material property across the strip width. In certain examples, the thin strip exits the hot rolling mill within the austenitic temperature range and enters the coilers in the range of 200 to 700 °C with a martensitic or bainitic microstructure. Of course any desired microstructure or material property may be achieved as desired. It is appreciated that while spray nozzles are shown arranged along a top side of the thin strip within the cooling section, additional spray nozzles may be arranged along the bottom side of the thin strip.

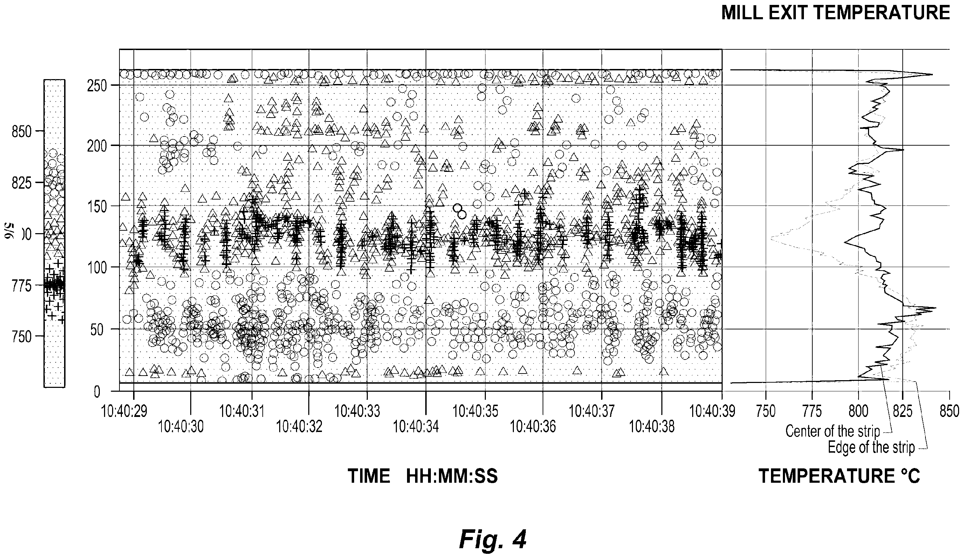

As noted previously, as the thin strip exits the rolling mill, the temperature of the strip may be at variance across the width of the strip. This is illustrated in FIG. 4 according to one example, where the temperature across the center of a thin strip is much lower than the temperature adjacent the edges of the strip. Of course, other temperature variations may be present in other instances. As such, cooling the entire width of the strip with all coolant discharge ports at constant flow would produce strip cooling differently across the width of the strip. Stated differently, by applying coolant consistently across the width of a strip characterized as having a variable temperature distribution, cooler portions of the strip width are similarly cooled concurrently with warmer portions of the strip width. As a result, this approach does not facilitate the achievement of a uniform temperature across the strip width along the cooling section, but rather achieves the undesirable formation of different microstructures and/or material properties across the width of the thin strip. To avoid this result, the improved methods disclosed herein strategically cool warmer portions of the thin strip separately from, or different from, cooler portions of the strip width to more quickly achieve a generally uniform temperature across the width of the thin strip. Thereafter, the strip width is further cooled uniformly to a final temperature at any particular cooling rate to achieve a desired microstructure and/or material property across the strip width. This improves product quality and eliminates scrap.

By spacing the plurality of coolant discharge ports across the strip width in a widthwise arrangement, temperature variants across the width of the thin strip may be better controlled and generally eliminated. While each coolant discharge ports may operate independent of the other ports in each widthwise arrangement, in certain instances, the coolant discharge ports along each widthwise arrangement are arranged into one of a plurality of zones, where each zone within the widthwise arrangement is configured to discharge coolant along a particular portion of the strip width. In this way, each zone and each coolant discharge port contained therein may operate independent of other zones to independently cool particular widthwise portions of the strip as desired. In arranging the coolant discharge ports in a widthwise arrangement across the strip width or cooling section width, the ports are commonly arranged in a row. When in this row, commonly the coolant discharge ports are arranged along a common pipe or conduit, which is referred to as a header. This header is fluidly connected to a common coolant source, such as a reservoir. In other variations, while arranged in a row, the coolant discharge ports may be individually arranged separate from any common pipe or conduit, whether or not each is fluidly connected to a common coolant source.

It is also noted that coolant discharge ports are also spaced along the length of the cooling section, so to continue to cool the thin strip as it translates along the cooling section. This continued cooling may further to eliminate any temperature variation across the strip width, as necessary, and to cool the strip to achieve the desired microstructure and/or material property. In certain instances, the coolant discharge ports arranged along the cooling section length form multiple widthwise arrangements of coolant discharge ports spaced along the length of the cooling section. In certain instances, these widthwise arrangements of coolant discharge ports form a row. As noted previously, each row of coolant discharge ports may be arranged along a header or otherwise.

In an exemplary embodiment illustrated in FIG. **5**, cooling section **97** includes a plurality of coolant discharge ports forming spray nozzles **90** arranged into two pluralities forming rows, each extending across the width, and in a widthwise direction, of each of the cooling section and the thin strip. Of particular note, each row of spray nozzles **90** is arranged along a header **120**, which may be a pipe or other conduit fluidly connected to a coolant source. In particular, the spray nozzles **90** in each header **120** are arranged into one of three zones. Specifically, a first plurality **P1** of nozzles **90** is divided into three zones (zones 1-3) and a second plurality **P2** of nozzles **90** is divided into three zones (zones 4-6). While each zone in the first plurality **P1** of spray nozzles **90** spans a width synonymous with a width of a zone in the second plurality **P2** of spray nozzles **90**, it is appreciated that the widthwise span of each zone may vary between pluralities of nozzles. And while each zone within each plurality **P1**, **P2** spans an equal width, the widthwise span of each zone within any widthwise arrangement of nozzles may vary as desired in other embodiments.

With reference to FIG. **5**, each zone has spray nozzles **90** adapted to independently cool the thin strip in each corresponding zone with a coolant flow. Each spray nozzle **90** is arranged such that the spray from each nozzle is closely arranged to spray from an adjacent nozzle or substantially abuts or overlaps spray from an adjacent nozzle across the width. Each zone may be independently controlled to regulate the coolant flow (*i.e.*, flow rate) from any corresponding spray nozzle **90** to provide a desired temperature distribution across the width of the thin strip leaving each zone of each header.

As noted previously, the cooling section may also include temperature sensors for measuring the temperature distribution across the thin strip at any location along the cooling section as the thin strip translates. In this way, the temperature of the thin strip may be sensed at a plurality of locations across the width of the thin strip to determine a temperature distribution across the width of the thin strip. With reference to the exemplary embodiment shown in FIG. **5**, sensors **100** measure the temperature distribution across the width of the thin strip entering and/or leaving each zone and produce a sensor signal corresponding to a sensed temperature at each of a plurality of locations across the strip width. In this instance, the widthwise temperature distribution is measured at different locations along the length of the strip using multiple sensors **100**, one arranged at the beginning of the cooling section **97**, one between the two rows **P1**, **P2** of spray nozzles **90**, and another at the end of cooling section **97.** Each sensor **100** may comprise single sensor or a plurality of sensors arranged partially or fully across the width of the thin strip and/or of the cooling section **97.** In this scenario, where the first sensor **100** measures the temperature distribution at the beginning of the cooling section, the second sensor **100** measures the temperature distribution between the beginning and the end of the cooling section, and the third sensor **100** measures the temperature distribution at the end of the cooling section so to control the cooling rate of the thin strip using coolant discharged from the plurality of spray nozzles **90** as the thin strip translates through the cooling section **97.**

It is appreciated that by measuring the temperatures of the thin strip, tailored cooling of the thin strip may be achieved to obtain a desired microstructure and/or material property. To achieve this tailored cooling, for any known thin strip being made of a particular material and having a particular thickness, knowledge of other parameters may be helpful in addition to knowing the temperatures of the thin strip across its width. For example, knowing the length of the cooling section, the translation speed of the thin strip through the cooling section, the rate of coolant discharge from each coolant discharge port, and the distance between spray nozzles along the length of the cooling section. For example, for any given thin strip, at any given location along the thin strip width, if a variable temperature distribution is identified, cooling is controlled across the strip width to eliminate the temperature variation. This may be achieved by selectively discharging coolant from particular coolant discharge ports or zones, and/or controlling the discharge rate of coolant from any such port. Thereafter, the strip width now having a substantially uniform temperature is further cooled as desired to obtain a desired microstructure and/or particular material properties. It is desirable to eliminate any temperature variations as quickly as possible and well before the strip temperatures reach phase transformation temperatures to achieve substantially uniform mechanical properties across the strip width. In these instances, the port discharge rates may be increased or decreased as desired to achieve the desired cooling rates and the desired final temperature at the end of the cooling section. If at the end of the cooling section, or at any point along the length of the cooling section, it is determined that any target strip temperature is not being achieved, adjustments may be made, manually or automatically using any of the controllers, to the nozzle discharge rates across the cooling section width and/or length to better obtain the desired strip temperatures.

While it has been noted that any or all of the parameters may be altered manually, any or all may also be automatically controlled, which includes controlling the coolant flow from the spray nozzles in each zone. This automatic control may be achieved , by a controller, such as any controller **110** in FIGS. **3** and **5**, to provide temperature regulation across the width of the thin strip. With specific reference to the embodiment shown in FIG. **3**, sensors **100** are arranged at the beginning and at end of a cooling section **97**, where the first measures the temperature at the beginning of the cooling section and the second sensor **100** measures the temperature distribution at the end of the cooling section so to control the cooling rate of the thin strip using coolant discharged from the plurality of spray nozzles **90** arranged along the thin strip as the thin strip translates through the cooling section **97.** In this way, the thin strip moves from a pair of casting rolls through a hot rolling mill to reduce the thickness of the thin strip and then to a cooling section **97.** As the thin strip approaches and/or departs each zone of each header, a controller is adapted to control the coolant flow from the coolant discharge port in each zone to provide temperature regulation across the width and/or length of the thin strip. Furthermore, the temperature of the thin strip approaching and/or departing each zone of the headers **120** in the cooling section **97** is measured and a sensor signal produced corresponding to the measured temperature in each zone along each header **120.** Each zone is individually controlled by regulating the coolant flow from the coolant discharge ports in each zone along each header in the cooling zone to provide a desired temperature distribution across the width of the thin strip. Note that the desired temperature distribution across the strip is expected to be more uniform with each header **120** as the strip moves through the cooling section **97.**

## Claims

1. A method of continuously casting metal strip comprising:
assembling a pair of counter-rotatable casting rolls having casting surfaces laterally positioned to form a gap at a nip between the casting rolls through which thin strip less than 3 mm in thickness can be cast;
assembling a metal delivery system capable of forming a casting pool supported on the casting surfaces of the casting rolls above the nip with side dams adjacent the ends of the nip to confine the casting pool;
counter rotating the casting rolls to form metal shells on the casting surfaces of the casting rolls that are brought together at the nip to deliver thin strip downwardly;
moving the thin strip from the casting rolls through a hot rolling mill to reduce the thickness of the thin strip to a desired thickness and then to a cooling section, the cooling section having a plurality of coolant discharge ports configured to discharge a flow of coolant along the thin strip, the plurality of coolant discharge ports being arranged into a plurality of rows each extending at least partially across a width of the cooling section and configured to substantially cool a full width of the thin strip, where each coolant discharge port is adapted to independently cool a portion of the thin strip across the width of the thin strip, where a first row of the plurality of rows is divided into zones, each of the zones including at least one of the plurality of coolant discharge ports;
initially sensing the temperature of the thin strip at a first plurality of locations across the width of the thin strip prior to the first row to determine a temperature distribution across the width of the thin strip, and producing a sensor signal corresponding to a sensed temperature at each of the first plurality of locations;
individually controlling the cooling across the thin strip by way of the coolant discharge port or the plurality coolant discharge ports in each zone of the first row using the temperature distribution determined in the step of initially sensing for the purpose of achieving a substantially uniform temperature substantially across the width of the thin strip;
after achieving a substantially uniform temperature substantially across the width of the thin strip, substantially cooling the width having a substantially uniform temperature to achieve a desired microstructure extending substantially across the width of the thin strip; **characterised in that**:
said initially sensing the temperature of the thin strip at the first plurality of locations occurs downstream of the hot rolling mill; and **in that**:
said first row of the plurality of rows is divided into three or more zones.

2. The method of claim 1 further comprising:
subsequently sensing a temperature of the thin strip at a second plurality of locations across the thin strip to determine a temperature distribution across the width of the thin strip subsequent to the first plurality of locations, after individually controlling the cooling across the thin strip along the first row and before a second row of the plurality of rows of coolant discharge ports, and producing a sensor signal corresponding to a sensed temperature at each of the second plurality of locations; and,
subsequently controlling the cooling across the thin strip by way of the coolant discharge port or ports in each zone of the second row of the plurality of rows using the temperature distribution determined in the step of subsequently sensing, to assist in achieving the substantially uniform temperature across the width of the thin strip and/or to achieve the particular microstructure in the thin strip at the end of the cooling section.

3. The method of claim 2, where the second row is located along the cooling section between the first row and the second plurality of locations across the thin strip.

4. The method of claim 2 or claim 3, where the temperature distribution determined in the step of subsequently sensing is a final temperature distribution sensed along the cooling section.

5. The method of claim 4, where the second plurality of locations is located at an end of the cooling section.

6. The method of any one of claims 2 to 4, where the second plurality of locations is located after the beginning and up to the end of the cooling section.

7. The method of any one of claims 2 to 6 further comprising:
subsequently controlling the cooling across the thin strip by way of the coolant discharge port or ports in each zone of the first row using the temperature distribution determined in the step of subsequently sensing, to assist in achieving the substantially uniform temperature across the width of the thin strip.

8. The method of claim 1 further comprising:
subsequently sensing a temperature of the thin strip at a second plurality of locations across the thin strip to determine a temperature distribution across the width of the thin strip subsequent to the first plurality of locations and after individually controlling the cooling across the thin strip along the first row, and producing a sensor signal corresponding to a sensed temperature at each of the second plurality of locations; and,
subsequently controlling the cooling across the thin strip by way of the coolant discharge port or ports in each zone of the first row using the temperature distribution determined in the step of subsequently sensing, to assist in achieving the substantially uniform temperature across the width of the thin strip.

9. The method of claim 8, where the temperature distribution determined in the step of subsequently sensing is a final temperature distribution sensed along the cooling section.

10. The method of any one of the preceding claims, where individually controlling the cooling of the thin strip in each zone of the first row is performed by controlling, in particular adjusting, the discharge flow rate of any one or more of the plurality of the coolant discharge ports.

11. The method of any one of the preceding claims, wherein the first row is divided into at least five zones and/or where the plurality of coolant discharge ports is a plurality of spray nozzles..

12. The method of any one of the preceding claims further comprising:
a controller adapted to control the coolant flow from the coolant discharge port or ports in each zone to provide temperature regulation across the width of the thin strip.

13. The method of any one of the preceding claims further comprising:
subsequently controlling the cooling across the thin strip by way of the coolant discharge port or ports in each zone of any one or more additional rows of the plurality of rows to assist in achieving the substantially uniform temperature across the width of the thin strip and/or to achieve the particular microstructure in the thin strip at the end of the cooling section.

14. The method of claim 13, where subsequently controlling the cooling across the thin strip by way of the coolant discharge port or ports in each zone of any one or more additional rows of the plurality of rows is performed using any temperature distribution determined in any one or more additional steps of subsequently sensing a temperature of the thin strip at any further plurality of locations across the thin strip to determine any further temperature distribution across the width of the thin strip subsequent to the first and second plurality of locations and after individually controlling the cooling across the thin strip along the one row and along the second row, and producing a sensor signal corresponding to a sensed temperature at each of the further plurality of locations.

15. An apparatus for continuously casting metal strip comprises:
a pair of counter-rotatable casting rolls having casting surfaces laterally positioned to form a gap at a nip between the casting rolls through which thin strip less than 3 mm in thickness can be cast;
a metal delivery system capable of forming a casting pool supported on the casting surfaces of the casting rolls above the nip with side dams adjacent the ends of the nip to confine the casting pool;
a hot rolling mill to reduce the thickness of the thin strip to a desired thickness; and a cooling section having a plurality of coolant discharge ports configured to discharge a flow of coolant along the thin strip, the plurality of coolant discharge ports being arranged into a plurality of rows each extending at least partially across a width of the cooling section and configured to substantially cool a full width of the thin strip, each coolant discharge port being adapted to independently cool a portion of the thin strip across the width of the thin strip, where a first row of the plurality of rows is divided into zones, each of the zones including at least one of the plurality of coolant discharge ports;
a sensor to sense the temperature of the thin strip at a first plurality of locations across the width of the thin strip prior to the first row to determine a temperature distribution across the width of the thin strip and produce a sensor signal corresponding to a sensed temperature at each of the first plurality of locations; and
a controller to individually control the cooling across the thin strip by way of the coolant discharge port or the plurality coolant discharge ports in each zone of the first row using the temperature distribution determined by the sensor for the purpose of achieving a substantially uniform temperature substantially across the width of the thin strip; **characterised in that**:
said sensor to sense the temperature of the thin strip at the first plurality of locations is located downstream of the hot rolling mill; and **in that**:
said first row of the plurality of rows is divided into three or more zones.

## Patentansprüche

1. Verfahren zum Stranggießen von Metallband, umfassend:
Zusammenbauen eines Paars gegenläufig drehbarer Gießwalzen mit Gießflächen, die seitlich angeordnet sind, um eine Lücke an einem Spalt zwischen den Gießwalzen zu bilden, durch den dünnes Band einer Dicke von weniger als 3 mm gegossen werden kann;
Zusammenbauen eines Metallzufuhrsystems, das in der Lage ist, ein Gießbecken zu bilden, das auf den Gießflächen der Gießwalzen oberhalb des Spaltes mit Seitendämmen in Nachbarschaft der Enden des Spaltes, um das Gießbecken zu begrenzen, getragen wird;
gegenläufiges Drehen der Gießwalzen zum Bilden von Metallschalen auf den Gießflächen der Gießwalzen, die am Spalt zusammengeführt werden, um dünnes Band nach unten abzugeben;
Bewegen des dünnen Bandes von den Gießwalzen durch eine Warmwalzanlage, um die Dicke des dünnen Bandes auf eine gewünschte Dicke zu reduzieren, und dann zu einem Kühlabschnitt, wobei der Kühlabschnitt eine Vielzahl von Kühlmittelabgabeöffnungen aufweist, die so ausgebildet sind, dass sie einen Strom von Kühlmittel entlang des dünnen Bandes abgeben, wobei die Vielzahl der Kühlmittelabgabeöffnungen in einer Vielzahl von Reihen angeordnet ist, die sich jeweils mindestens teilweise quer über eine Breite des Kühlabschnitts erstrecken und ausgebildet sind, um eine volle Breite des dünnen Bandes wesentlich zu kühlen, wobei jede Kühlmittelabgabeöffnung ausgebildet ist, um einen Abschnitt des dünnen Bandes quer über die Breite des dünnen Bandes unabhängig zu kühlen, wobei eine erste Reihe der Vielzahl von Reihen in Zonen unterteilt ist, wobei jede der Zonen mindestens eine der Vielzahl von Kühlmittelabgabeöffnungen beinhaltet;
anfängliches Erfassen der Temperatur des dünnen Bandes an einer ersten Vielzahl von Stellen quer über die Breite des dünnen Bandes vor der ersten Reihe, um eine Temperaturverteilung quer über die Breite des dünnen Bandes zu bestimmen, und Erzeugen eines Sensorsignals, das einer erfassten Temperatur an jeder der ersten Vielzahl von Stellen entspricht;
einzelnes Steuern des Kühlens quer über das dünne Band durch die Kühlmittelabgabeöffnung oder die Vielzahl der Kühlmittelabgabeöffnungen in jeder Zone der ersten Reihe unter Verwenden der im Schritt des anfänglichen Erfassens ermittelten Temperaturverteilung zum Erzielen einer im Wesentlichen einheitlichen Temperatur im Wesentlichen quer über die Breite des dünnen Bandes;
nach dem Erreichen einer im Wesentlichen einheitlichen Temperatur im Wesentlichen quer über die Breite des dünnen Bandes, wesentliches Kühlen der Breite, die eine im Wesentlichen einheitliche Temperatur aufweist, um eine gewünschte Mikrostruktur zu erzielen, die sich im Wesentlichen quer über die Breite des dünnen Bandes erstreckt; **dadurch gekennzeichnet, dass**:
das anfängliche Erfassen der Temperatur des dünnen Bandes an der ersten Vielzahl von Stellen der Warmwalzanlage nachgeschaltet erfolgt; und dadurch, dass:
die erste Reihe der Vielzahl von Reihen in drei oder mehr Zonen unterteilt ist.

2. Verfahren nach Anspruch 1, ferner umfassend:
anschließendes Erfassen einer Temperatur des dünnen Bandes an einer zweiten Vielzahl von Stellen quer über das dünne Band, um eine Temperaturverteilung quer über die Breite des dünnen Bandes nach der ersten Vielzahl von Stellen zu bestimmen, nach dem einzelnen Steuern des Kühlens quer über das dünne Band entlang der ersten Reihe und vor einer zweiten Reihe der Vielzahl von Reihen von Kühlmittelabgabeöffnungen, und Erzeugen eines Sensorsignals, das einer erfassten Temperatur an jeder der zweiten Vielzahl von Stellen entspricht; und
anschließendes Steuern des Kühlens quer über das dünne Band durch die Kühlmittelabgabeöffnung bzw. -öffnungen in jeder Zone der zweiten Reihe der Vielzahl von Reihen unter Verwenden der Temperaturverteilung, die im Schritt des anschließenden Erfassens bestimmt wurde, um beim Erzielen der im Wesentlichen einheitlichen Temperatur quer über die Breite des dünnen Bandes zu unterstützen und/oder um die bestimmte Mikrostruktur im dünnen Band am Ende des Kühlabschnitts zu erzielen.

3. Verfahren nach Anspruch 2, wobei die zweite Reihe entlang des Kühlabschnitts zwischen der ersten Reihe und der zweiten Vielzahl von Stellen quer über das dünne Band angeordnet ist.

4. Verfahren nach Anspruch 2 oder 3, wobei die im Schritt des anschließenden Erfassens bestimmte Temperaturverteilung eine entlang des Kühlabschnitts erfasste Endtemperaturverteilung ist.

5. Verfahren nach Anspruch 4, wobei die zweite Vielzahl von Stellen an einem Ende des Kühlabschnitts angeordnet ist.

6. Verfahren nach einem der Ansprüche 2 bis 4, wobei die zweite Vielzahl von Stellen nach dem Beginn und bis zum Ende des Kühlabschnitts angeordnet ist.

7. Verfahren nach einem der Ansprüche 2 bis 6, ferner umfassend:
anschließendes Steuern des Kühlens quer über das dünne Band durch die Kühlmittelabgabeöffnung bzw. -öffnungen in jeder Zone der ersten Reihe unter Verwenden der im Schritt des anschließenden Erfassens bestimmten Temperaturverteilung, um beim Erzielen der im Wesentlichen einheitlichen Temperatur quer über die Breite des dünnen Bandes zu unterstützen.

8. Verfahren nach Anspruch 1, ferner umfassend:
anschließendes Erfassen einer Temperatur des dünnen Bandes an einer zweiten Vielzahl von Stellen quer über das dünne Band, um eine Temperaturverteilung quer über die Breite des dünnen Bandes nach der ersten Vielzahl von Stellen und nach dem einzelnen Steuern des Kühlens quer über das dünne Band entlang der ersten Reihe zu bestimmen, und Erzeugen eines Sensorsignals, das einer erfassten Temperatur an jeder der zweiten Vielzahl von Stellen entspricht; und
anschließendes Steuern des Kühlens quer über das dünne Band durch die Kühlmittelabgabeöffnung bzw. -öffnungen in jeder Zone der ersten Reihe unter Verwenden der im Schritt des anschließenden Erfassens bestimmten Temperaturverteilung, um beim Erzielen der im Wesentlichen einheitlichen Temperatur quer über die Breite des dünnen Bandes zu unterstützen.

9. Verfahren nach Anspruch 8, wobei die im Schritt des anschließenden Erfassens bestimmte Temperaturverteilung eine entlang des Kühlabschnitts erfasste Endtemperaturverteilung ist.

10. Verfahren nach einem der vorhergehenden Ansprüche, wobei das einzelne Steuern des Kühlens des dünnen Bandes in jeder Zone der ersten Reihe durch Steuern, insbesondere Einstellen, der Abgabeflussrate einer oder mehrerer der Vielzahl der Kühlmittelabgabeöffnungen durchgeführt wird.

11. Verfahren nach einem der vorhergehenden Ansprüche, wobei die erste Reihe in mindestens fünf Zonen unterteilt ist und/oder wobei die Vielzahl von Kühlmittelabgabeöffnungen eine Vielzahl von Spritzdüsen ist.

12. Verfahren nach einem der vorhergehenden Ansprüche, ferner umfassend:
eine Steuerung, die ausgebildet ist, um den Kühlmittelstrom von der Kühlmittelabgabeöffnung bzw. -öffnungen in jeder Zone zu steuern, um für eine Temperaturregelung quer über die Breite des dünnen Bandes zu sorgen.

13. Verfahren nach einem der vorhergehenden Ansprüche, ferner umfassend:
anschließendes Steuern des Kühlens quer über das dünne Band durch die Kühlmittelabgabeöffnung bzw. -öffnungen in jeder Zone von einer oder mehreren zusätzlichen Reihen der Vielzahl von Reihen, um beim Erzielen der im Wesentlichen einheitlichen Temperatur quer über die Breite des dünnen Bandes zu unterstützen und/oder um die bestimmte Mikrostruktur im dünnen Band am Ende des Kühlabschnitts zu erzielen.

14. Verfahren nach Anspruch 13, wobei das anschließende Steuern des Kühlens quer über das dünne Band durch die Kühlmittelabgabeöffnung bzw. -öffnungen in jeder Zone von einer oder mehreren zusätzlichen Reihen der Vielzahl von Reihen unter Verwenden einer Temperaturverteilung, die in einem oder mehreren zusätzlichen Schritten des anschließenden Erfassens einer Temperatur des dünnen Bandes an einer weiteren Vielzahl von Stellen quer über das dünne Band bestimmt wird, um eine weitere Temperaturverteilung quer über die Breite des dünnen Bandes nach der ersten und zweiten Vielzahl von Stellen und nach dem einzelnen Steuern des Kühlens quer über das dünne Band entlang der einen Reihe und entlang der zweiten Reihe zu bestimmen, und Erzeugen eines Sensorsignals, das einer erfassten Temperatur an jeder der weiteren Vielzahl von Stellen entspricht, durchgeführt wird.

15. Vorrichtung zum Stranggießen von Metallband, umfassend:
ein Paar gegenläufig drehbarer Gießwalzen mit Gießflächen, die seitlich angeordnet sind, um eine Lücke an einem Spalt zwischen den Gießwalzen zu bilden, durch den dünnes Band einer Dicke von weniger als 3 mm gegossen werden kann;
ein Metallzufuhrsystem, das in der Lage ist, ein Gießbecken zu bilden, das auf den Gießflächen der Gießwalzen oberhalb des Spaltes mit Seitendämmen in Nachbarschaft der Enden des Spaltes, um das Gießbecken zu begrenzen, getragen wird;
eine Warmwalzanlage, um die Dicke des dünnen Bandes auf eine gewünschte Dicke zu reduzieren; und einen Kühlabschnitt mit einer Vielzahl von Kühlmittelabgabeöffnungen, die so ausgebildet sind, dass sie einen Strom von Kühlmittel entlang des dünnen Bandes abgeben, wobei die Vielzahl der Kühlmittelabgabeöffnungen in einer Vielzahl von Reihen angeordnet ist, die sich jeweils mindestens teilweise quer über eine Breite des Kühlabschnitts erstrecken und ausgebildet sind, um eine volle Breite des dünnen Bandes wesentlich zu kühlen, wobei jede Kühlmittelabgabeöffnung ausgebildet ist, um einen Abschnitt des dünnen Bandes quer über die Breite des dünnen Bandes unabhängig zu kühlen, wobei eine erste Reihe der Vielzahl von Reihen in Zonen unterteilt ist, wobei jede der Zonen mindestens eine von der Vielzahl von Kühlmittelabgabeöffnungen beinhaltet;
einen Sensor zum Erfassen der Temperatur des dünnen Bandes an einer ersten Vielzahl von Stellen quer über die Breite des dünnen Bandes vor der ersten Reihe, um eine Temperaturverteilung quer über die Breite des dünnen Bandes zu bestimmen und ein Sensorsignal zu erzeugen, das einer erfassten Temperatur an jeder der ersten Vielzahl von Stellen entspricht; und
eine Steuerung zum einzelnen Steuern des Kühlens quer über das dünne Band durch die erste Kühlmittelabgabeöffnung oder die Vielzahl der Kühlmittelabgabeöffnungen in jeder Zone der ersten Reihe unter Verwenden der durch den Sensor ermittelten Temperaturverteilung zum Erzielen einer im Wesentlichen einheitlichen Temperatur im Wesentlichen quer über die Breite des dünnen Bandes; **dadurch gekennzeichnet, dass**:
der Sensor zum Erfassen der Temperatur des dünnen Bandes an der ersten Vielzahl von Stellen der Warmwalzanlage nachgeschaltet angeordnet ist; und dadurch, dass:
die erste Reihe der Vielzahl von Reihen in drei oder mehr Zonen unterteilt ist.

## Revendications

1. Procédé de coulée en continu d'une bande métallique comprenant :
l'assemblage d'une paire de rouleaux de coulée à contre-rotation ayant des surfaces de coulée
positionnées latéralement pour former un écart au niveau d'un pincement entre les rouleaux de coulée à travers lequel une bande fine inférieure à 3 mm d'épaisseur peut être coulée ;
l'assemblage d'un système de distribution de métal capable de former un bain de coulée soutenu sur les surfaces de coulée des rouleaux de coulée au-dessus du pincement avec des barrages latéraux adjacents aux extrémités du pincement pour confiner le bain de coulée ;
la contre-rotation des rouleaux de coulée pour former des coquilles métalliques sur les surfaces de coulée des rouleaux de coulée qui sont rassemblées au niveau du pincement afin de distribuer une bande fine vers le bas ;
le déplacement de la bande fine depuis les rouleaux de coulée à travers un laminoir à chaud pour réduire l'épaisseur de la bande fine jusqu'à une épaisseur désirée, puis jusqu'à une section de refroidissement, la section de refroidissement ayant une pluralité d'orifices de décharge de liquide de refroidissement configurés pour décharger un flux de liquide de refroidissement le long de la bande fine, la pluralité d'orifices de décharge de liquide de refroidissement étant agencée en une pluralité de rangées s'étendant chacune au moins partiellement sur une largeur de la section de refroidissement et configurée pour refroidir sensiblement une largeur complète de la bande fine, où chaque orifice de décharge de liquide de refroidissement est adapté pour refroidir indépendamment une portion de la bande fine sur la largeur de la bande fine, où une première rangée de la pluralité de rangées est divisée en zones, chacune des zones incluant au moins l'un de la pluralité d'orifices de décharge de liquide de refroidissement ;
la détection initiale de la température de la bande fine au niveau d'une première pluralité d'emplacements sur la largeur de la bande fine avant la première rangée afin de déterminer une répartition de température sur la largeur de la bande fine, et la production d'un signal de détecteur correspondant à une température détectée au niveau de chacun de la première pluralité d'emplacements ;
la commande individuelle du refroidissement sur la bande fine au moyen de l'orifice de décharge de liquide de refroidissement ou de la pluralité d'orifices de décharge de liquide de refroidissement dans chaque zone de la première rangée à l'aide de la répartition de température déterminée à l'étape de détection initiale afin d'atteindre une température sensiblement uniforme sensiblement sur la largeur de la bande fine ;
après avoir atteint une température sensiblement uniforme sensiblement sur la largeur de la bande fine, le refroidissement de manière sensible de la largeur ayant une température sensiblement uniforme pour atteindre une microstructure désirée s'étendant sensiblement sur la largeur de la bande fine ; **caractérisé en ce que** :
ladite détection initiale de la température de la bande fine au niveau de la première pluralité d'emplacements se produit en aval du laminoir à chaud ; et **en ce que** :
ladite première rangée de la pluralité de rangées est divisée en trois zones ou plus.

2. Procédé selon la revendication 1, comprenant en outre :
la détection subséquente d'une température de la bande fine au niveau d'une deuxième pluralité d'emplacements sur la bande fine afin de déterminer une répartition de température sur la largeur de la bande fine à la suite de la première pluralité d'emplacements, après la commande individuelle du refroidissement sur la bande fine le long de la première rangée et avant une deuxième rangée de la pluralité de rangées d'orifices de décharge de liquide de refroidissement, et la production d'un signal de détecteur correspondant à une température détectée au niveau de chacun de la deuxième pluralité d'emplacements ; et,
la commande subséquente du refroidissement sur la bande fine au moyen de l'orifice ou des orifices de décharge de liquide de refroidissement dans chaque zone de la deuxième rangée de la pluralité de rangées à l'aide de la répartition de température déterminée à l'étape de détection subséquente, afin d'aider à atteindre la température sensiblement uniforme sur la largeur de la bande fine et/ou pour atteindre la microstructure particulière dans la bande fine au niveau de l'extrémité de la section de refroidissement.

3. Procédé selon la revendication 2, où la deuxième rangée est placée le long de la section de refroidissement entre la première rangée et la deuxième pluralité d'emplacements sur la bande fine.

4. Procédé selon la revendication 2 ou la revendication 3, où la répartition de température déterminée à l'étape de détection subséquente est une répartition finale de température détectée le long de la section de refroidissement.

5. Procédé selon la revendication 4, où la deuxième pluralité d'emplacements est placée au niveau d'une extrémité de la section de refroidissement.

6. Procédé selon l'une quelconque des revendications 2 à 4, où la deuxième pluralité d'emplacements est placée après le début et jusqu'à l'extrémité de la section de refroidissement.

7. Procédé selon l'une quelconque des revendications 2 à 6, comprenant en outre :
la commande subséquente du refroidissement sur la bande fine au moyen de l'orifice ou des orifices de décharge de liquide de refroidissement dans chaque zone de la première rangée à l'aide de la répartition de température déterminée à l'étape de détection subséquente, afin d'aider à atteindre la température sensiblement uniforme sur la largeur de la bande fine.

8. Procédé selon la revendication 1, comprenant en outre :
la détection subséquente d'une température de la bande fine au niveau d'une deuxième pluralité d'emplacements sur la bande fine afin de déterminer une répartition de température sur la largeur de la bande fine à la suite de la première pluralité d'emplacements et après la commande individuelle du refroidissement sur la bande fine le long de la première rangée, et la production d'un signal de détecteur correspondant à une température détectée au niveau de chacun de la deuxième pluralité d'emplacements ; et,
la commande subséquente du refroidissement sur la bande fine au moyen de l'orifice ou des orifices de décharge de liquide de refroidissement dans chaque zone de la première rangée à l'aide de la répartition de température déterminée à l'étape de détection subséquente, afin d'aider à atteindre la température sensiblement uniforme sur la largeur de la bande fine.

9. Procédé selon la revendication 8, où la répartition de température déterminée à l'étape de détection subséquente est une répartition finale de température détectée le long de la section de refroidissement.

10. Procédé selon l'une quelconque des revendications précédentes, où la commande individuelle du refroidissement de la bande fine dans chaque zone de la première rangée est effectuée en commandant, en particulier en ajustant, le débit de décharge de l'un quelconque des uns ou plusieurs de la pluralité d'orifices de décharge de liquide de refroidissement.

11. Procédé selon l'une quelconque des revendications précédentes, dans lequel la première rangée est divisée en au moins cinq zones et/ou où la pluralité d'orifices de décharge de liquide de refroidissement est une pluralité de buses de pulvérisation.

12. Procédé selon l'une quelconque des revendications précédentes, comprenant en outre :
un dispositif de commande adapté pour commander le débit de liquide de refroidissement depuis l'orifice ou les orifices de décharge de liquide de refroidissement dans chaque zone afin de fournir une régulation de température sur la largeur de la bande fine.

13. Procédé selon l'une quelconque des revendications précédentes, comprenant en outre :
la commande subséquente du refroidissement sur la bande fine au moyen de l'orifice ou des orifices de décharge de liquide de refroidissement dans chaque zone de l'une quelconque des une ou plusieurs rangées supplémentaires de la pluralité de rangées afin d'aider à atteindre la température sensiblement uniforme sur la largeur de la bande fine et/ou pour atteindre la microstructure particulière dans la bande fine au niveau de l'extrémité de la section de refroidissement.

14. Procédé selon la revendication 13, où la commande subséquente du refroidissement sur la bande fine au moyen de l'orifice ou des orifices de décharge de liquide de refroidissement dans chaque zone de l'une quelconque des une ou plusieurs rangées supplémentaires de la pluralité de rangées est effectuée en utilisant toute répartition de température déterminée dans l'une quelconque des une ou plusieurs étapes supplémentaires de détection subséquente d'une température de la bande fine au niveau d'une autre quelconque pluralité d'emplacements sur la bande fine pour déterminer toute autre répartition de température sur la largeur de la bande fine à la suite des première et deuxième pluralités d'emplacements et après la commande individuelle du refroidissement sur la bande fine le long de l'une rangée ou le long de la deuxième rangée, et la production d'un signal de détecteur correspondant à une température détectée au niveau de l'autre pluralité d'emplacements.

15. Appareil de coulée en continu d'une bande métallique comprenant :
une paire de rouleaux de coulée à contre-rotation ayant des surfaces de coulée positionnées latéralement pour former un écart au niveau d'un pincement entre les rouleaux de coulée à travers lequel une bande fine inférieure à 3 mm d'épaisseur peut être coulée ;
un système de distribution de métal capable de former un bain de coulée soutenu sur les surfaces de coulée des rouleaux de coulée au-dessus du pincement avec des barrages latéraux adjacents aux extrémités du pincement pour confiner le bain de coulée ;
un laminoir à chaud pour réduire l'épaisseur de la bande fine jusqu'à une épaisseur désirée ; et une section de refroidissement ayant une pluralité d'orifices de décharge de liquide de refroidissement configurés pour décharger un flux de liquide de refroidissement le long de la bande fine, la pluralité d'orifices de décharge de liquide de refroidissement étant agencée en une pluralité de rangées s'étendant chacune au moins partiellement sur une largeur de la section de refroidissement et configurée pour refroidir sensiblement une largeur complète de la bande fine, chaque orifice de décharge de liquide de refroidissement étant adapté pour refroidir indépendamment une portion de la bande fine sur la largeur de la bande fine, où une première rangée de la pluralité de rangées est divisée en zones, chacune des zones incluant au moins l'un de la pluralité d'orifices de décharge de liquide de refroidissement ;
un détecteur pour détecter la température de la bande fine au niveau d'une première pluralité d'emplacements sur la largeur de la bande fine avant la première rangée afin de déterminer une répartition de température sur la largeur de la bande fine, et produire un signal de détecteur correspondant à une température détectée au niveau de chacun de la première pluralité d'emplacements ; et
la commande individuelle du refroidissement sur la bande fine au moyen de l'orifice de décharge de liquide de refroidissement ou de la pluralité d'orifices de décharge de liquide de refroidissement dans chaque zone de la première rangée à l'aide de la répartition de température déterminée par le détecteur afin d'atteindre une température sensiblement uniforme sensiblement sur la largeur de la bande fine ; **caractérisé en ce que** :
ledit détecteur pour détecter la température de la bande fine au niveau de la première pluralité d'emplacements est placé en aval du laminoir à chaud ; et dans ce cas :
ladite première rangée de la pluralité de rangées est divisée en trois zones ou plus.
